# EUROPEAN PATENT APPLICATION

(11) **EP 4 733 358 A1**
(43) Date of publication of application: **29.04.2026**
(21) Application number: 25205444.0
(22) Date of filing: 29.09.2025
(51) Int. Cl.: C08L 77/06

(54) **POLYAMIDE 56 COMPOSITION CONTAINING A SILICONE MOLD RELEASE ADDITIVE**

(30) Priority: 29.09.2024 CN 202411379710
(71) Applicant: TE Connectivity Solutions GmbH, 8200 Schaffhausen (CH); Tyco Electronics (Shanghai) Co., Ltd., Pilot Free Trade Zone Shanghai 200131 (CN)
(72) Inventor: Tao, Dejie, Fremont, 94555 (US); Wang, Lei, Fremont, 94555 (US); Huang, Zhongxi, Shanghai, 200131 (CN); Li, Dan, Shanghai, 200131 (CN); Hoarfrost Beers, Megan, Fremont, 94555 (US); Gao, Ting, Fremont, 94555 (US)
(74) Representative: Johnstone, Edward Ian

(57) **Abstract**

A polyamide 56 composition comprises a polyamide 56 resin and a silicone mold release additive. The polyamide 56 composition can be injection molded into articles. The silicone mold release additive can be an unmodified silicone resin or an epoxy-functional silicone resin.

## Description

### FIELD OF THE INVENTION

The present invention relates to a polyamide 56 composition containing a silicone mold release additive and an injection molded article made from the polyamide 56 composition.

### BACKGROUND OF THE INVENTION

Polyamides, also referred to as nylons, are some of the most widely used thermoplastic materials due to their physical characteristics. Polyamides are polymers with repeat units linked by amide bonds, produced, for example, by the condensation of a diacid and diamine. They have good abrasion and wear resistance, as well as high chemical and corrosion resistance. Polyamides have flexibility and low density in addition to ultraviolet resistance. Traditional polyamides are generally easily moldable. In light of these characteristics, polyamides play an important role in many automotive, electrical, and consumer goods applications.

As many traditional polyamides are made from fossil fuels which emit carbon dioxide and contribute to global warming, there has been an increased attempt to use biobased polyamides. Examples of biobased polyamides include but are not limited to polyamide 56 and polyamide 1010. However, some of these biobased polyamides have a stronger adhesion to metal which may cause a composition containing biobased polyamides to stick to the mold during the molding process. This sticking increases the molding time as compared to non-biobased polyamides. Longer molding times results in a reduction of productivity, as well as increased costs.

Injection molding is a manufacturing process for producing parts from thermoplastic materials such as polyamide. Generally, the thermoplastic material is fed into a heated barrel, molten and forced into a mold cavity, where it hardens by cooling. After the hardening, the part maintains the shape of the mold cavity. Typically the shorter the time for hardening, the more quickly the process progresses. Mold cavities may be produced from metal, such as steel, and are precision-machined to form the features of the desired end part.

After being hardened, the parts are released from the mold by opening of the mold and ejecting the part from the cavity of the mold. Ejection often takes place by pushing the article out of the mold by ejecting pins, coming up from the cavity wall, normally in the direction of ejection of the part. It is important that the part easily and quickly releases from the mold, so that no increase in cycle time of the production of the part takes place. If the part does not release easily, it is even possible that the part can be damaged during ejection from the mold. The ejection of the parts is facilitated by almost completing or even fully completing the hardening step in the mold, by total cooling down of the part. Because of the cooling process the dimensions of the part decrease, due to thermal shrinkage and crystallization of the thermoplastic material. However a total cooling down of the part may take a substantial amount of time, so that the cycle time for the production of the part increases to an unacceptable level and it is no longer possible to produce the parts at an acceptable cost. Mold release is further enhanced by the addition of a mold release agent to the thermoplastic composition. The addition of the mold release additive must be balanced against any potential negative influence on the surface properties of the part. A mold release additive is a chemical compound that facilitates the release of a part from a mold by creating a slip effect between the surface of the part and the surface of the mold.

Examples of mold release additives which can be used in thermoplastic materials conventionally include fatty acids, fatty acid metals salts, fatty acid esters, fatty acid amides, fatty acid soaps, (modified) paraffin waxes, and (modified) polyolefin waxes.

U.S. Patent No. 3,628,996 describes a polydimethylsiloxane release agent. The release agent is made by mixing (1) a hydroxyl endblocked polydimethylsiloxane having a viscosity of at least 350 cs. and (2) either from 25 to 75 percent by weight of a triorganosiloxy endblocked dimethylpolysiloxane or from 10 to 75 percent by weight of a polydimethylsiloxane having a triorganosiloxy group on one end and a hydroxyl on the other, (2) having a viscosity of at least 4000 cs. at 25° C. and (3) a cross-linker for (1)..

U.S. Patent Application Publication No. US2009/0306330A1 describes a polyamide resin comprising a dicarboxylic acid comprising an adipic acid unit and a diamine unit comprising a pentamethylenediamine and a hexamethylenediamine wherein the weight ration of the pentamethylenediamine unit to the hexamethylenediamine unit is in the range of 95:4 to 60:4, and which can be produced by using raw materials that are free from generation of carbon dioxide. The publication also describes a hinged molded product made from the polyamide resin.

Chinese patent application CN106867250A describes a polyamide composition for rapid injection molding. The polyamide composition comprises 95-100 parts by weight of a polyamide resin and less than 0.5 parts by weight of a nucleating agent. The polyamide resin used in the polyamide composition includes polyamide 56. The polyamide composition may also include a lubricant. The lubricant includes one or more of N,N'-ethylene-bis-stearamide (EBS), amino silicone oil, glyceryl monostearate, polydimethylsiloxane, low molecular weight polyethylene, low molecular weight ethylene-vinyl acetate copolymer, sodium stearate, calcium stearate, barium stearate, zinc stearate, lithium stearate, microcrystalline wax, oxidized polyethylene wax and pentaerythritol stearate. The weight portion of the lubricant is preferably 0.05-1 weight portion of the composition.

U.S. Patent No. 9,873,793B2 describes a polyamide resin composition, a method of manufacturing and a molded product. The polyamide resin composition is usable to produce a molded product having excellent heat aging resistance, surface appearance, retention stability, dimensional accuracy, chemical resistance and creep resistance. One of the polyamide resins that can be used in the composition described in this patent includes nylon 56.

U.S. Patent Application Publication No. US2018/0350532A1 describes a molded case circuit breaker base which is made of a polyamide resin. A polyamide resin having thermally conductivity property as well as an electrically insulating property, such as polyamide 56 can be used as a material of the molded case circuit breaker base.

European Patent Specification EP 2896656B1 describes a polyamide resin and molded article. The polyamide resin used in this application is nylon 56. The patent also discusses the use of mold release agents. Examples of mold release agents which can be used in the composition include ethylenediamine-stearic acid- sebacic acid polycondensates and silicone compounds.

U.S. Patent No. 10,233,326B2 describes a polyamide moulding compound which consists of a blend of two specific polyamides. The first polyamide is based substantially on 1,5-pentadiamine. The second polyamide is polyamide 6I/6T. The polyamide moulding compound is distinguished from other polyamide moulding compounds as having low shrinkage and low differential shrinkage (difference between shrinkage of the moulded article longitudinally and traversely relative to the injection flow).

A molded article comprising resin composition containing polyamide resin is described in European Patent Specification EP 3369778B1. The polyamide resin can be nylon 56. The composition also contains a mold release agent such as ethylene diamine/stearic acid/sebacic acid polycondensate or a silicone compound.

Chinese Patent No. CN10966294B describes polyamide 56 composition with an improved crystallization rate, which consists of 99.75-99.95 wt.% of polyamide, 0.05-0.15 wt.% of a copper-containing mixture and 0-0.5 wt.% of other additives, wherein the copper-containing mixture at least comprises a copper-containing compound, and the copper-containing compound is copper salt or a copper salt complex. The polyamide 56 composition also includes a polyamide heat stabilizer conventionally used in polyamides and thereby results in a very high molding efficiency upon rapid cooling in an injection molding process with little variation in the manufacturing cost of the composition, compared to other inorganic type nucleation-modified polyamide compositions.

U.S. Patent No. 11,898,035B2 describes a flame retardant polyamide composition which can be molded into various articles. The polyamide composition can include a mold release agent such as a polyolefin wax.

Commercially available products such as Dupont MULTIBASE Silicone Based additives have been designed to be added to polyamides. These additives are siloxane based and provide the polyamide with better mold release and faster throughput.

However, there exists a need for a biobased polyamide composition comprising a polyamide 56 and a silicone mold release additive, which can be easily and economically be molded into articles, preferably using injection molding.

### SUMMARY OF THE INVENTION

An embodiment is directed to a polyamide 56 composition comprising a polyamide 56 and a silicone mold release additive.

Another embodiment is directed to a polyamide 56 composition comprising polyamide 56 and a silicone mold release additive wherein the composition is molded into an article.

Other features and advantages of the present invention will be apparent from the following more detailed description of the preferred embodiment, taken in conjunction with the accompanying drawings which illustrate, by way of example, the principles of the invention.

### BRIED DESCRIPTION OF THE DRAWINGS

The accompanying drawings, which are incorporated into and form a part of the specification, schematically illustrate one or more illustrative embodiments of the invention and, together with the general description given above and detailed description given below, serve to explain the principles of the invention, and wherein:

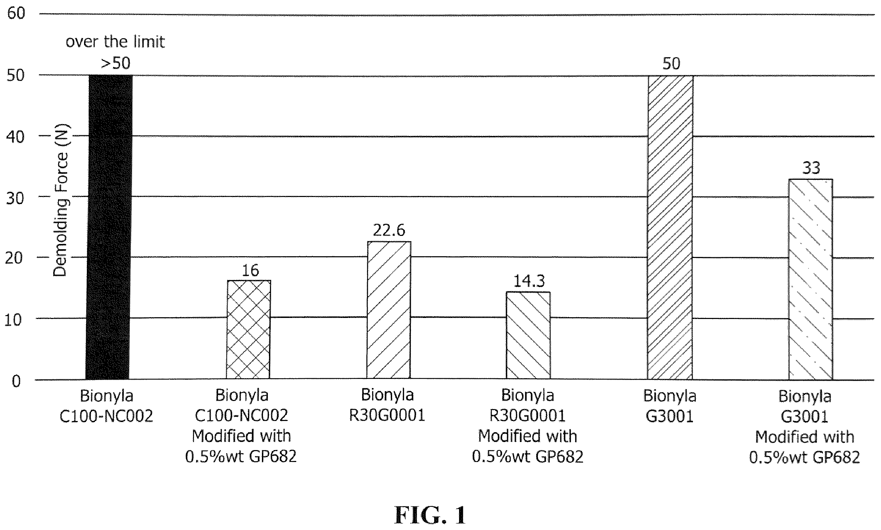

FIG. 1 is chart showing the demolding force measurement of various polyamide 56 compositions using a TA Discovery Rheometer, HR-2.

### DETAILED DESCRIPTION OF THE INVENTION

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise.

Moreover, the features and benefits of the invention are illustrated by reference to the preferred embodiments. Accordingly, the invention expressly should not be limited to such embodiments illustrating some possible non-limiting combination of features that may exist alone or in other combinations of features, the scope of the invention being defined by the claims appended hereto.

The polyamide 56 composition of the instant invention comprises a biobased polyamide resin. Biobased polyamide resins can be produced using polycondensation processes with dioic acids of different chain length. Polyamide 56 resin is polymerized from biobased 1,5 diaminopentane and fossil based adipic acid. However, due to its structure, polyamide 56 has a stronger adhesion to metal than polyamide 66 which causes it to stick to metal molds during the molding process. Examples of a commercially available polyamide 56 resins that can be used in the instant invention include ECOBLEND N56F from Shanghai Kumho Sunny Plastics Co., Ltd., BIONYLA C100-NC002 from Kingfa Sci.& Tech. Co., Ltd., and BIONYLA R30G0001 from Kingfa Sci.& Tech. Co., Ltd.

The polyamide 56 composition also includes a silicone mold release additive in addition to the polyamide 56 resin. A mold release additive is a chemical compound that facilitates the release of a part from a mold by creating a slip effect between the surface of the part and the surface of the mold. The silicone mold release additive that is used in the polyamide 56 composition is chosen from the group consisting of functional silicone mold release additives and non-functional silicone mold release additives. It is believed that the silicone mold release additive enables improved release upon being molded. It is believed that the functional silicone mold release additive reacts with the polyamide 56 to prevent silicone migration out of the molded part.

Functional silicones are siloxanes incorporated with reactive groups such as anhydride, amino or epoxy groups. One category of functional silicones is monofunctional, difunctional, and multifunctional epoxy silicones having a molecular weight in the range of about 350 to 40,000, with pendant and/or terminal epoxy functionalization. Examples of epoxy functional silicone mold release additives include: Epoxypropoxypropyl-Terminated Polydimethylsiloxanes; (Epoxypropoxypropylmethylsiloxane)-(Dimethylsiloxane) Copolymer; (Epoxypropoxypropyl)dimethoxysilyl-Terminated Polydimethylsiloxane; Monophenyl-Functional Tris(Epoxy-Terminated Polydimethylsiloxane); Mono-(2,3-Epoxy)Propylether-Terminated Polydimethylsiloxane; (Epoxycyclohexylethylmethylsiloxane)-Dimethylsiloxane Copolymers; and (2-3% Epoxycyclohexylethylmethylsiloxane)(10-15% Methoxypolyalkyleneoxymethylsiloxane)-(Dimethylsiloxane) Terpolymer.

Epoxypropoxypropyl-Terminated Polydimethylsiloxanes which have the following structure: 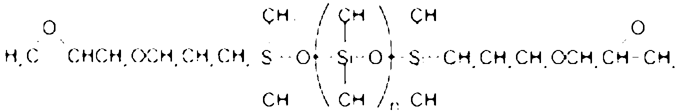 can be used as the functional silicone. Epoxypropoxypropyl-Terminated Polydimethylsiloxanes having a molecular weight from 363 to 5500 are available commercially as DMS-E09 , DMS-E11, DMS-E12 and DMS-E21, all from Gelest, Inc. Epoxypropoxypropyl-Terminated Polydimethylsiloxanes having a molecular weight from 2,200 to 6,200 are commercially available as GP-682 silicone fluid, and GP-504 silicone fluid available from Genesee Polymers Corporation.

(Epoxypropoxypropylmethylsiloxane)-(Dimethylsiloxane) Copolymer which has the following structure: 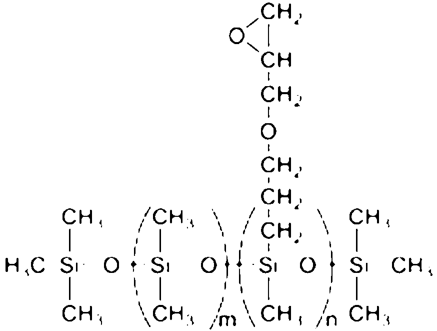 can be used as the functional silicone. Epoxypropoxypropylmethylsiloxane)-(Dimethylsiloxane) Copolymer having a molecular weight of 7,000 to 9,000 is commercially available as EMS-622 from Gelest, Inc. Epoxypropoxypropylmethylsiloxane)-(Dimethylsiloxane) Copolymer having a molecular weight of 3,100 to 11,000 is available as GP-607 epoxy functional silicone fluid, GP-554 silicone fluid and GP-32 epoxy functional fluid from Genesee Polymers Corp.

Another functional silicone that can be used in the invention is (Epoxypropoxypropyl)dimethoxysilyl-Terminated Polydimethylsiloxane having a structure of: 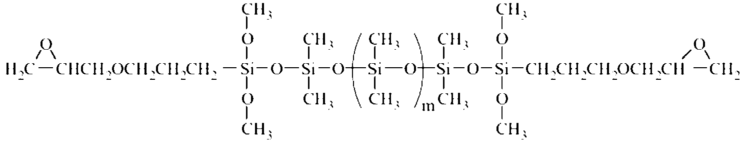 Epoxypropoxypropyl)dimethoxysilyl-Terminated Polydimethylsiloxane having a molecular weight of 3,500 to 4,000 is commercially available as DMS EX-21 from Gelest, Inc.

Yet an additional functional silicone that can be used in the instant invention is Monophenyl-Functional Tris(Epoxy-Terminated Polydimethylsiloxane) having a structure of: 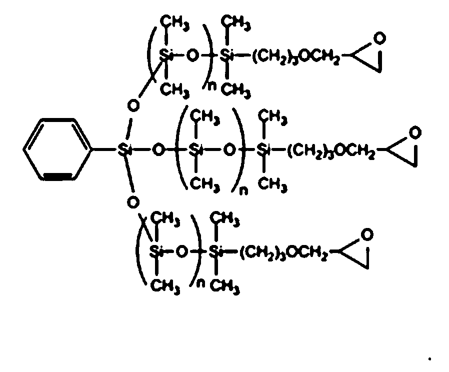 A commercially available Monophenyl-Functional Tris(Epoxy-Terminated Polydimethylsiloxane) having a molecular weight from 500 to 700 is MCT-EP13.

Mono-(2,3-Epoxy)Propylether-Terminated Polydimethylsiloxane having the following structure can be used as the functional silicone: 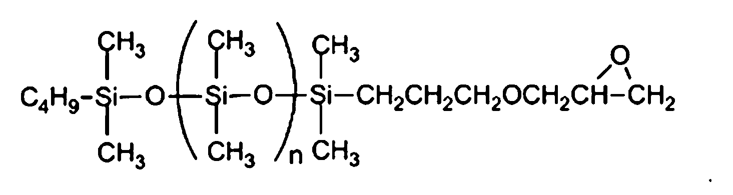 Commercially available Mono-(2,3-Epoxy)Propylether-Terminated Polydimethylsiloxane having a molecular weight of 1,000 to 5,000 are available at MCR-E11 and MCR-E21 from Gelest, Inc.

(Epoxycyclohexylethylmethylsiloxane)-Dimethylsiloxane Copolymers can be used as the functional silicone if they have the following structure: 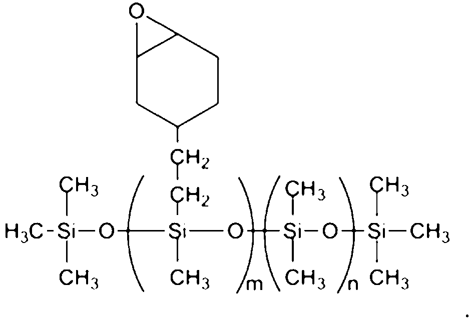 Examples of commercially available Epoxycyclohexylethylmethylsiloxane)-Dimethylsiloxane Copolymers having a molecular weight of 12, 000 to 20,000 include ECMS-127, ECMS-227, ECMS-327 and ECMS 924, all available from Gelest, Inc. An Epoxycyclohexylethylmethylsiloxane)-Dimethylsiloxane Copolymer having a molecular weight of 13,500 is available as GP-172 from Genesee Polymers corporation.

Another example of a functional silicone which can be used in the polyamide 56 composition is (2-3% Epoxycyclohexylethylmethylsiloxane)(10-15% Methoxypolyalkyleneoxymethylsiloxane)-(Dimethylsiloxane) Terpolymer. This (2-3% Epoxycyclohexylethylmethylsiloxane)(10-15% Methoxypolyalkyleneoxymethylsiloxane)-(Dimethylsiloxane) Terpolymer has the following structure: 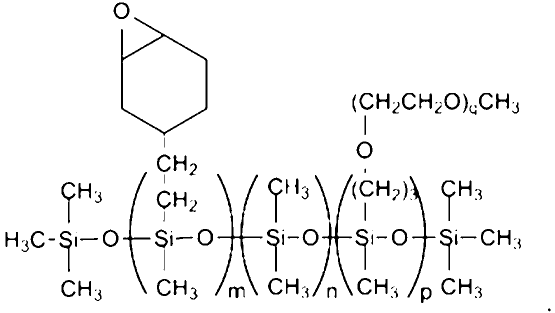 (2-3% Epoxycyclohexylethylmethylsiloxane)(10-15% Methoxypolyalkyleneoxymethylsiloxane)-(Dimethylsiloxane) Terpolymers having a molecular weight of 900 to 40,00 are available commercially as DMS-EC17 and DMS-EC31 available from Gelest, Inc.

The functional silicone used in the polyamide 56 composition used as a mold release additive is in the range of about 0.1 to about 5 wt. % (based upon the total weight of the polyamide 56 composition), preferably about 0.2 to about 2 wt.% (based upon the total weight of the polyamide 56 composition).

Non-functional silicones which can be used as the mold release additive are silicone copolymers containing a high content of siloxane. They can be incorporated with non-reactive organic groups such as long chain alkyl, aryl and fluoroalkyl groups. A basic chemical structure for a non-functional silicone is: 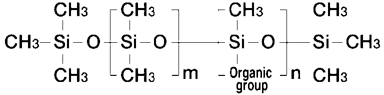 Preferably the non-functional silicones have a siloxane content of at least 20%. An example of a commercially available non-functional silicone that can be used as a mold release additive in the polyamide 56 compositions is GENIOPLAST Pellet 345 available from Wacker Chemie, AG, which is a silicone copolymer containing over 90 % siloxane. The non-functional silicone used in the polyamide 56 composition is in the range of about 0.1 to about 20 wt.% (based upon the total weight of the polyamide 56 composition), preferably, about 1.0 to about 10 wt. % (based upon the total weight of the polyamide 56 composition), and more preferably, about 1.0 to about 5 wt. % (based upon the total weight of the polyamide 56 composition).

Other conventional additives may be added to the polyamide 56 composition. Examples of conventional additives include pigments, dyes, voiding agents, antistatic agents, foaming agents, plasticizers, radical scavengers, anti-blocking agents, anti-dust agents, antifouling agents, surface active agents, slip aids, optical brighteners, viscosity modifiers, gloss improvers, dispersion stabilizers, UV stabilizers, UV absorbers, antioxidants such as phenol antioxidants or amine antioxidants, lubricity agents, heat stabilizers, hydrolysis stabilizers, cross-linking activators, coupling agents, radio opacifiers (such as for example, but not limited to, barium sulfate), tungsten metal, non-oxide bismuth salts, colorants, reinforcing agents, impact strength modifiers, flame retardants, and any combination thereof. Such additives may be included in conventional amounts.

The polyamide 56 resin is mixed with the silicone mold release additive. The mixing equipment can be any suitable equipment used in the art of mixing concentrated solids. Examples of such suitable equipment include a batch mixer such as a Brabender mixer or a Banbury mixer, a single extruder, a twin screw extruder, high speed centrifugal mixers and the like.

The mixed polyamide 56 composition is then preferably injection molded. Any conventional injection molding machine which can be used for polyamides can be used to make parts from the polyamide 56 composition of the instant invention. For example, in one embodiment, the length/diameter of the screw was in the range of 18:1 to 25:1. The mold temperature ranged from 50 ° to 80 ° C.

Although the polyamide 56 composition of the present invention is preferably injection molded, the polyamide 56 composition can be molded into a molded article according to a molding method generally employed for a thermoplastic resin composition, including but not limited to injection compression molding, extrusion molding, press forming, blow molding, calender molding or cast molding. In particular, from the viewpoint of ease in molding, mass productivity and cost, injection molding is the preferred molding method.

The polyamide 56 composition can be molded into many different parts. For example, the composition can be made into seals, gaskets, connectors, wires, cables, printed wire boards, or EMI shields as well as other electronic or computer components. The composition can be used to make electronic components, such smart phones, general automotive parts, electric motors, e-powertrains, batteries and battery enclosures, chargers for electric vehicles and other components of electric vehicles. In addition, the composition of the instant invention can be used to make molded parts. Furthermore, the polyamide composition of the instant invention can also be used to make medical devices, surgical instruments, medical enclosures or wearable medical devices. Moreover, the polyamide 56 composition of the instant invention can be used to manufacture any product which withstands load or mechanical function.

### Examples

Various samples were prepared using a polyamide 56, and a mold release additive. The polyamide 56 resin and mold release additive were first dry-mixed together. The mixed material was then compounded with a TSM D6/2 Brabender extruder having 42 mm parallel counter-rotating twin screw. The compounding temperature was set in the range of about 275° to about 285 °C. The screw speed of the extruder was set to 85 rpm.

Once the material was mixed together as set forth above, the material was then injection molded using a trial mold with one cavity into sample parts using a 130 Ton SE-D Molding Machine having a 28 mm screw diameter. The injection temperature was about 285° C and the mold temperature was about 80° C. A part was formed using various polyamide 56 compositions as set forth below and evaluated at 3 seconds, 5 seconds, 7 seconds, and 20 seconds of cooling to determine if the part was sticking to the mold.

Example 1 was a control sample. In this example, only the polyamide 56 resin was used in the polyamide 56 composition. The polyamide 56 composition did not have any mold release additive in the composition. The polyamide 56 resin was ECOBLEND N56F from Shanghai Kumho Sunny Plastics Co., Ltd. The composition of Example 1 was processed according to the condition stated above and molded. The molded part was evaluated at 3 seconds, 5 seconds, 7 seconds and 20 seconds to determine if it could be ejected or if it would stick to the mold. The results of this evaluation showed that the injection molded polyamide 56 composition of this Example 1 could not be ejected and the part stuck to the mold during all the time frames.

Example 2, a sample containing polyamide 56 resin and a mold release additive, was prepared. The polyamide 56 resin was ECOBLEND N56F from Shanghai Kumho Sunny Plastics Co., Ltd. 2 wt. % of an epoxy functional silicone (based upon the entire weight of the polyamide 56 composition), the mold release additive, was added to the polyamide 56 resin. The epoxy functional silicone used in this Example 2 was DMS-E12, an epoxypropoxypropyl terminated polydimethylsiloxane, available from Gelest, Inc. The composition of Example 2 was processed according to the condition stated above and molded. The molded part was evaluated at the above time frames to determine if it could be ejected or if it would stick to the mold. The results of this evaluation showed that the injection molded polyamide 56 composition of this Example 2 could be ejected after the 3 seconds cooling time and the part did not stick to the mold after 3 seconds, 5 seconds, and 7 seconds.

Example 3, a sample containing polyamide 56 resin and a mold release additive, was prepared. The polyamide 56 resin used in the sample was BIONYLA C100-NC002 from Kingfa Sci.& Tech. Co., Ltd. 2 wt. % of an epoxy functional silicone (based upon the total polyamide 56 composition), the mold release additive, was added to the polyamide 56 resin. The epoxy functional silicone used in this Example 3 was GP-682 silicone fluid, available from Genesee Polymers Corporation. The composition of Example 3 was processed according to the condition stated above and molded. The molded part was evaluated at the above time frames to determine if it could be ejected or if it would stick to the mold. The results of this evaluation showed that the injection molded polyamide 56 composition of this Example 3 could be ejected after the 3 seconds cooling time and the part did not stick to the mold after 3 seconds, 5 seconds, and 7 seconds.

Example 4, a sample containing polyamide 56 resin and a mold release additive, was prepared. The polyamide 56 resin used in this Example 4 was BIONYLA C100-NC002 from Kingfa Sci.& Tech. Co., Ltd. 0.5 wt. % of an epoxy functional silicone (based upon the total polyamide 56 composition), the mold release additive, was added to the polyamide 56 resin. The epoxy functional silicone used in this Example 4 was GP-682 silicone fluid, available from Genesee Polymers Corporation. The composition of Example 4 was processed according to the conditions stated above and molded into a part. The molded part was evaluated at the above time frames to determine if it could be ejected or if it would stick to the mold. The results of this evaluation showed that the injection molded polyamide 56 composition of this Example 4 could be ejected after the 3 seconds cooling time and the part did not stick to the mold after 3 seconds, 5 seconds, and 7 seconds.

Example 5, a sample containing polyamide 56 resin and a mold release additive, was prepared. The polyamide 56 resin used in this composition was BIONYLA C100-NC002 from Kingfa Sci.& Tech. Co., Ltd. 0.5 wt. % of a mold release additive, a non-functional silicone (based upon the total polyamide 56 composition), was added to the polyamide 56 resin. The non-functional silicone used in this Example 5 was GENIOPLAST Pellet 345 available from Wacker Chemie, AG. The composition of Example 5 was processed according to the condition stated above and molded. The molded part was evaluated at the above time frames to determine if it could be ejected or if it would stick to the mold. The results of this evaluation showed that the injection molded polyamide 56 composition of this Example 5 could be ejected after 3 seconds cooling time and the part did not stick to the mold.

Example 6, a sample containing polyamide 56 resin and a mold release additive, was prepared. The polyamide 56 resin was BIONYLA C 100-NC003 from Kingfa Sci.& Tech. Co., Ltd. 0.5 wt. % of a mold release additive, an epoxy functional silicone (based upon the total polyamide 56 composition), was added to the polyamide 56 resin. The epoxy functional silicone used in this Example 6 was GP-682 silicone fluid, available from Genesee Polymers Corporation. The composition of Example 6 was processed according to the condition stated above and molded. The molded part was evaluated at the above time frames to determine if it could be ejected or if it would stick to the mold. The results of this evaluation showed that the injection molded polyamide 56 composition of this Example 6 could not be ejected even after the 20 seconds cooling time and the part continued stick to the mold. While we do not wish to be bound by the hypothesis we believe that either additives and/or copolymers in this material or the manner that the polyamide 56 resin was formed impacted the release time for the part from the mold.

Example 7, a sample containing polyamide 56 resin and a mold release additive, was prepared. The polyamide 56 resin was BIONYLA C100-NC003 from Kingfa Sci.& Tech. Co., Ltd. 0.5 wt. % of a mold release additive, a non-functional silicone (based upon the total polyamide 56 composition), was added to the polyamide 56 resin. The non-functional silicone used in this Example 7 was GENIOPLAST Pellet 345 available from Wacker Chemie, AG. The composition of Example 7 was processed according to the condition stated above and molded. The molded part was evaluated at the above time frames to determine if it could be ejected or if it would stick to the mold. The results of this evaluation showed that the injection molded polyamide 56 composition of this Example 7 could not be ejected after the 3 seconds cooling time but could be ejected after 5 seconds.

Examples 1 through 5 and 7 show that the addition of either an epoxy functional dimethylsiloxane copolymer mold release additive or non-functional silicone mold release additive to polyamide 56 resin provides improved mold release in comparison to the control without a mold release additive.

FIG. 1 is a chart showing the demolding force measurements of various polyamide 56 compositions of the instant invention in Newtons. The demolding force was measured using a rheometer, TA Discovery HR-2. In this series of experiments, the test samples were injection molded to be 5 mm in diameter with a thickness of 0.8mm. If the additive was used in the composition, it was present at 0.5wt. % of the total composition. The rheometer was set to "other axial" to measure the demolding force. In this particular rheometer, the maximum demolding force is 50 N. The melting temperature is set to 260° C and the test sample is maintained at the temperature (i.e. soaked) for 10 seconds. The temperature for starting the test is set to 175° C and soak time is 5 seconds. The fixture gap is set to 0.775 mm and the gap speed is set to 2 µm. The test is started and the chamber and fixture are heated. The test sample is placed on the bottom fixture of the rheometer. The test sample is melted and cooled down to the test temperature. The fixture is pulled open and the force is recorded. These test results show that the demolding force decreased for each composition described in FIG.1 that contained a mold release additive as compared to the same composition without any mold release additive.

One skilled in the art will appreciate that the invention may be used with many modifications of structure, arrangement, proportions, sizes, materials and components and otherwise used in the practice of the invention, which are particularly adapted to specific environments and operative requirements without departing from the principles of the present invention. The presently disclosed embodiments are therefore to be considered in all respects as illustrative and not restrictive, the scope of the invention being defined by the appended claims, and not limited to the foregoing description or embodiments.

## Claims

1. A polyamide 56 composition comprising a polyamide 56 and a silicone mold release additive.

2. The composition of claim 1, wherein said silicone mold release additive comprises a functional silicone.

3. The composition of claim 2, wherein said functional silicone is chosen from the group consisting of epoxypropoxypropyl-terminated polydimethylsiloxanes; (epoxypropoxypropylmethylsiloxane)-(dimethylsiloxane) copolymer; (epoxypropoxypropyl)dimethoxysilyl-terminated polydimethylsiloxane; monophenyl-functional tris(epoxy-terminated polydimethylsiloxane); mono-(2,3-epoxy)propylether-terminated polydimethylsiloxane; (epoxycyclohexylethylmethylsiloxane)-dimethylsiloxane copolymers; and (2-3% epoxycyclohexylethylmethylsiloxane)(10-15% methoxypolyalkyleneoxymethylsiloxane)-(dimethylsiloxane) terpolymers.

4. The composition of claim 2 or claim 3, wherein said epoxy functional silicone is present in the amount of about 0.1 to about 5 weight percent of the polyamide 56 composition, or in the amount of about 0.2 to about 2 weight percent of the polyamide 56 composition.

5. The composition of any of claims 2 to 4, wherein said functional silicone is an epoxypropoxypropyl-terminated polydimethylsiloxane.

6. The composition of any of claims 2 to 4, wherein said functional silicone is an (epoxypropoxypropylmethylsiloxane)-(dimethylsiloxane) copolymer.

7. The composition of any of claims 2 to 4, wherein said functional silicone is an (epoxypropoxypropyl)dimethoxysilyl-terminated polydimethylsiloxane.

8. The composition of any of claims 2 to 4, wherein said functional silicone is a monophenyl-functional tris(epoxy-terminated polydimethylsiloxane).

9. The composition of any of claims 2 to 4, wherein said functional silicone is a mono-(2,3-epoxy)propylether-terminated polydimethylsiloxane.

10. The composition of any of claims 2 to 4, wherein said functional silicone is an (epoxycyclohexylethylmethylsiloxane)-dimethylsiloxane copolymer.

11. The composition of any of claims 2 to 4, wherein said functional silicone is a (2-3% epoxycyclohexylethylmethylsiloxane)(10-15% methoxypolyalkyleneoxymethylsiloxane)-(dimethylsiloxane) terpolymer.

12. The composition of claim 1, wherein said silicone mold release additive is a non-functional silicone.

13. The composition of claim 12, wherein said non-functional silicone is present in the amount of about 0.1 to about 20 weight percent of the polyamide 56 composition, or in the amount of about 0.1 to about 10 weight percent of the polyamide 56 composition, or in the amount of about 1.0 to about 10 weight percent of the polyamide 56 composition, or in the amount of about 1.0 to about 5 weight percent of the polyamide 56 composition.

14. An article made by injection molding a polyamide 56 composition comprising polyamide 56 resin and a silicone mold release additive.

15. The article of claim 14, wherein said silicone mold release additive is a functional silicone.

16. The article of claim 14, wherein said silicone mold release additive is a non-functional silicone.
